# EUROPÄISCHE PATENTSCHRIFT

(11) **EP 3 090 193 B1**
(45) Veröffentlichungstag und Bekanntmachung des Hinweises auf die Patenterteilung: **08.01.2020**
(21) Anmeldenummer: 13799029.7
(22) Anmeldetag: 29.11.2013
(51) Int. Cl.: F16G 3/02, F16G 3/08, E05D 7/10

(54) **VERSCHLUSSVORRICHTUNG ZWISCHEN ZWEI ZU VERBINDENDEN ENDEN VON ZWEI ODER MEHREREN TEILEN**
CLOSURE DEVICE BETWEEN TWO ENDS OF TWO OR MORE PARTS TO BE CONNECTED
DISPOSITIF DE FERMETURE ENTRE DEUX EXTRÉMITÉS À RELIER DE DEUX PIÈCES OU PLUS

(43) Veröffentlichungstag der Anmeldung: 09.11.2016
(73) Patentinhaber: ARS Meccanica Dolomiti GmbH, 39100 Bozen (IT)
(72) Erfinder: CHISTÈ, Aldo, 39057 Eppan (IT)
(74) Vertreter: Zimmermann & Partner Patentanwälte mbB
(86) Internationale Anmeldenummer: PCT/EP2013/075097
(87) Internationale Veröffentlichungsnummer: WO 2015/078518

(56) Entgegenhaltungen:
- EP-A1- 0 394 764
- EP-A1- 2 354 399
- FR-A1- 2 621 066
- GB-A- 186 012
- US-B1- 8 584 318

## Beschreibung

Ausführungsformen der vorliegenden Erfindung beziehen sich auf eine Verschlussvorrichtung zwischen zwei zu verbindenden Enden von zwei oder mehreren Teilen. Insbesondere beziehen sich Ausführungsformen auf eine Verschlussvorrichtung zum lösbaren verbinden von zwei Verschlusskörpern, die Teile der Verschlussvorrichtung ausbilden.

### STAND DER TECHNIK

Um Gegenstände über Bänder, Gurte, Seile, Leinen und ähnlichem miteinander zu verbinden, müssen üblicherweise die mindestens zwei Verbindungsenden miteinander entweder mittels einer Schnalle oder eines Knotens oder in einer anderen bekannten Art und Weise verbunden werden. Dies gilt auch für die Verbindung von Gegenständen wie Türflügel mit einem Türstock über ein Scharnier. Dieser Vorgang erfordert oftmals Zeit, um die Sicherheit für Arbeiter und Produkt gewährleisten zu können, vor allem bei einer Demontage. Im Fall von Hebebändern sollten diese möglichst auf der gesamten Breite zum Aufliegen kommen, um die maximale Tragfähigkeit gewährleisten zu können. Diesem Erfordernis wurde bis jetzt mittels bekannter Vorrichtungen nicht wirksam nachgekommen.

Im Dokument EP 0 738 840 A2 wird ein Riemenverbinder mit Verbinderklammern und einem durch die Gelenke ineinander greifenden Scharnierbögen der Verbinderklammern hindurchgeführten Kupplungsstab beschrieben. Der Kupplungsstab und die Verbindungsklammern bestehen aus einem austenitischem Mangan-Hartstahl. Durch die gelenkig ineinander greifenden Scharnierbögen und zwei Riemenverbinder ist ein gemeinsamer Kupplungsstab im Vollquerschnitt hindurchgeführt.

Die Klammerschenkel der Verbinderklammern weisen Öffnungen zum Hindurchtreiben von Befestigungskrampen auf. Im Dokument FR 2 621 066 A1 wird ein Scharnier beschrieben, dessen Elemente leicht trennbar sind.

Verbindungen sollen einen sicheren Verschluss bilden, wobei eine Montage bzw. Demontage einfach durchgeführt werden soll. Insbesondere bei Hebebändern ist es wünschenswert, das Drücken von Federn oder die Notwendigkeit des Anhebens bzw. Verdrehen von Bändern zu eliminieren.

Es soll eine verbesserte Verschlussvorrichtung zur Verfügung gestellt werden.

### OFFENBARUNG DER ERFINDUNG

Die Aufgabe der vorliegenden Erfindung liegt daher darin, die oben genannten Probleme des Standes der Technik zumindest teilweise zu lösen und/oder zum Beispiel die Zeit des Verschluss- und Öffnungsvorganges zwischen zwei Verbindungsenden zweier Elemente (z.B. von Gurten, Bändern, Seilen, Schnüren oder von miteinander drehbar zu verbindenden Gegenständen) zu reduzieren und trotzdem eine große Sicherheit und Zuverlässigkeit zu erzielen.

Diese Aufgabe wird durch eine Verschlussvorrichtung gemäß Anspruch 1 gelöst. Weitere Ausgestaltungen, Details, Aspekte, Ausführungsformen ergeben sich aus den Unteransprüchen, der Beschreibung und den Zeichnungen.

Gemäß einer Ausführungsform wird eine Verschlussvorrichtung zum wiederholbaren Verbinden und Trennen eines ersten Verschlusskörpers mit einem zweiten Verschlusskörper zur Verfügung gestellt. Die Verschlussvorrichtung beinhaltet weiterhin einen Verschlussstab wobei der Verschlussstab in einem ersten Abschnitt zwei gegenüberliegende flache Ebenen aufweist, wobei der erste Verschlusskörper mindestens eine Durchführung für den Verschlussstab beinhaltet, wobei der Verschlussstab drehbar in der mindestens einen Durchführung zur Verfügung gestellt ist, und der zweite Verschlusskörper mindestens ein Eingreifelement umfasst, das durch Drehen des Verschlussstabs mit dem Verschlussstab verriegelt werden kann. Durch das drehbare Verschließen einer Verbindung von Verschlusskörpern mittels Drehen eines Verschlussstabs können die Verschlusskörper leicht in eine Position zum Verschließen gebracht werden. Dies vereinfacht das Verbinden und Trennen bzw. das Schließen und Öffnen der Verschlussvorrichtung.

Gemäß einer weiteren vorteilhaften Ausführungsform kann der Verschlussstab in einer ersten Rotationsposition des Verschlussstabes in den zweiten Verschlusskörper translatorisch in einer radialen Richtung des Verschlussstabes eingeführt werden und ist in einer zweiten Rotationsposition, die von der ersten Rotationsposition unterschiedlich ist, radial in dem zweiten Verschlusskörper fixierbar. Die translatorische Bewegung beim Zusammenführen der Verschlusskörper führt zu einem besonders einfachen Positionieren in eine Verschlussposition, die durch einen Drehen des Verschlussstabs verriegelt werden kann. Da die Rotation der Verriegelung unabhängig von der Richtung der Belastung der Verschlussvorrichtung ist, kann eine hohe Sicherheit der Verriegelung gewährleistet werden.

Gemäß einer weiteren vorteilhaften Ausführungsform kann das mindestens eine Eingreifelement drehbar in dem zweiten Verschlusskörper gelagert sein. Insbesondere kann gemäß einer weiteren vorteilhaften Ausführungsform das mindestens eine Eingreifelement so geformt sein, dass es den Verschlussstab in einem ersten Bereich seitlich umfassen kann und durch Drehen des Verschlussstabs in dem zweiten Verschlusskörper gedreht wird. Gemäß einer weiteren vorteilhaften Ausführungsform kann das mindestens eine Eingreifelement ein zylindrischer Körper (z.B. eine Hülse) sein, der eine Aussparung aufweist, mit der er den Verschlussstab seitlich umfassen kann. Die Verwendung einer Hülse kann zu einer verbesserten Belastbarkeit bzw. zur Ausgestaltung für höhere Tragkräfte und/oder Zugkräfte eingesetzt werden, da die Komponenten der Verschlussvorrichtung hierdurch formschlüssig zur Verfügung gestellt werden können.

Gemäß einer weiteren vorteilhaften Ausführungsform kann der Verschlussstab zumindest einen ersten Abschnitt und zumindest einen zweiten Abschnitt beinhalten, wobei der zweite Abschnitt einen runden Querschnitt hat und der erste Abschnitt in allen Richtungen im Vergleich zum runden Querschnitt des zweiten Abschnitts reduzierte Abmessungen aufweist. Dies erlaubt die Verwendung einer Hülse. Die Abmessungen in den Richtungen sind hierbei als die maximalen Längen der Begrenzungen des Querschnitts in den jeweiligen Raumrichtungen zu verstehen. In zumindest einer Raumrichtung kann der erste Abschnitt einen Bereich aufweisen, der im Vergleich zum zweiten Abschnitt unverändert ist, d.h. kein Material von einem runden Stab entfernt wurde; da in der gegenüberliegen Raumrichtung die Materialstärke im Vergleich zum runden Querschnitt reduziert ist, ändert sich auch in dieser Raumrichtung die Abmessung des Querschnitts. Dies korrespondiert mit der Tatsache, dass die Hülse den ersten Abschnitt mit mehr als 180° umschlingt.

Gemäß einer weiteren vorteilhaften Ausführungsform kann der Verschlussstab zumindest einen ersten Abschnitt und zumindest einen zweiten Abschnitt beinhalten, wobei der zweite Abschnitt einen runden Querschnitt hat und der erste Abschnitt in zumindest einer Richtung im Vergleich zum runden Querschnitt des zweiten Abschnitts dieselbe Abmessungen aufweist. Zum Beispiel kann hierbei das Eingreifelement durch zumindest einen offenen Ring am zweiten Verschlusskörper ausgebildet sein. Eine solche Ausgestaltung erlaubt den Verzicht auf eine Hülse, was die Herstellungskosten reduzieren kann.

Gemäß einer weiteren vorteilhaften Ausführungsform kann die Vorrichtung weiterhin einen am Verschlussstab befestigten ersten Stopper beinhalten, der verhindert, dass der Verschlussstab in einer ersten axialen Richtung aus der mindestens einen Durchführung herausgeführt werden kann. Gemäß einer weiteren vorteilhaften Ausführungsform kann die Vorrichtung einen am Verschlussstab befestigten zweiten Stopper beinhalten, der verhindert, dass der Verschlussstab in einer der ersten axialen Richtung entgegen gerichteten zweiten Richtung aus der mindestens einen Durchführung herausgeführt werden kann. Zum Beispiel kann der erste Stopper ein federndes Element aufweisen, so dass der Verschlussstab gegen eine Federkraft in die zweite Richtung gezogen wird. Somit kann der Verschlussstab axial fixiert werden. Die Federkraft in die zweite Richtung erlaubt eine weitere Sicherung der Verschlussvorrichtung, da der Verschlussstab in eine Verrieglungsposition, zum Beispiel eine Vertiefung, gezogen werden kann.

Gemäß einer weiteren vorteilhaften Ausführungsform kann der Verschlussstab einen Riegel aufweisen, mit dem die für den Verschluss erforderliche Drehposition des Verschlussstabs in Bezug zu dem ersten Verschlusskörper verriegelt werden kann. Zum Beispiel kann der Riegel in einer Vertiefung in dem ersten Verschlusskörper fixierbar sein.

Gemäß einer weiteren vorteilhaften Ausführungsform kann der erste Verschlusskörper eine Oberflächenformgebung aufweisen, über die der Riegel mittels der Federkraft des ersten Stoppers selbständig geführt wird und damit den Verschlussstab verriegelt. Zum Beispiel kann die Oberflächenformgebung eine schräge Ebene sein. Hierdurch kann eine automatische Verriegelung zur Verfügung gestellt werden bzw. das Risiko eines versehentlichen Öffnens weiter reduziert werden.

Gemäß einer weiteren vorteilhaften Ausführungsform kann der Öffnungswinkel, d.h. der Winkelbereich des Schlitzes, des offenen Rings 5° oder mehr betragen. Der Öffnungswinkel kann zum Beispiel darüber hinaus kleiner als 160° sein. Zusätzlich oder alternativ kann der Durchmesser des Verschlussstabs von zumindest 0.5 mm, insbesondere zumindest 1 mm, weiterhin insbesondere zumindest 3 mm betragen, weiterhin insbesondere zumindest 5 mm betragen. Mittels geeigneter Wahl des Durchmessers des Verschlussstabs kann ein Kompromiss aus Belastbarkeit und Baugröße zur Verfügung gestellt werden.

### KURZE BESCHREIBUNG DER ZEICHNUNGEN

Ausführungsbeispiele der Erfindung sind in den Figuren dargestellt und werden im Folgenden näher beschrieben. Es zeigen:
Figur 1A zeigt eine Explosionsansicht einer Verschlussvorrichtung gemäß Ausführungsformen der vorliegenden Erfindung, wobei ein Eingriffselement durch eine Hülse und einen offenen Ring ausgebildet ist;
Figur 1B zeigt die Verschlussvorrichtung aus Figur 1A in zusammengebauter Form und im geschlossenen Zustand;
Figur 2A zeigt eine weitere Verschlussvorrichtung gemäß Ausführungsform der vorliegenden Erfindung, wobei der Verschlussstab mittels eines Eingriffselementes rotiert wird;
Figur 2B zeigt die Verschlussvorrichtung aus Figur 2A in zusammengebauter Form und im geschlossenen Zustand;
Figur 3 zeigt eine weitere Verschlussvorrichtung gemäß Ausführungsform der vorliegenden Erfindung, wobei ein Eingriffselement durch einen offenen Ring ausgebildet ist;
Figur 4 zeigt eine Verschlussvorrichtung gemäß Ausführungsform der vorliegenden Erfindung in zusammengebauter Form und im geschlossenen Zustand;
Figuren 5A und 5B zeigen Schnittansichten von Verschlussvorrichtung gemäß Ausführungsform der vorliegenden Erfindung;
Figuren 6A und 6B zeigen Ausschnitte von Verschlussvorrichtung gemäß Ausführungsform der vorliegenden Erfindung, wobei ein automatisches Schließen bzw. ein verhindern des Öffnens durch eine Oberflächenstruktur des ersten Verschlusskörpers zur Verfügung gestellt ist.

### AUSFÜHRUNGSFORMEN DER ERFINDUNG

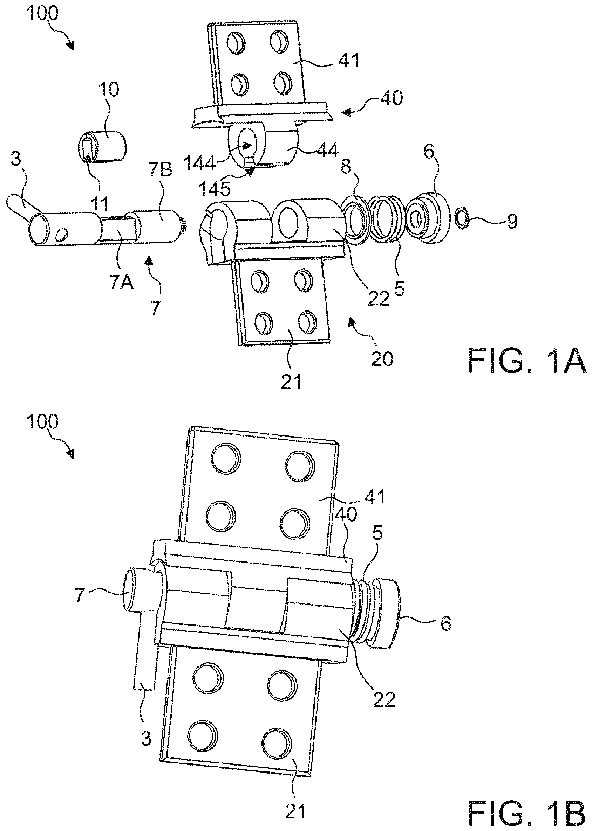

Figur 1A zeigt eine erste Ausführungsform einer Verschlussvorrichtung 100. Die Verschlussvorrichtung 100 beinhaltet einen ersten Verschlusskörper 20 und einen zweiten Verschlusskörper 40. Die Verschlusskörper haben jeweils einen oder mehr Ringe an einer verschlussseitigen Seite des Verschlusskörpers und ein Befestigungselement auf einer der verschlussseitigen Seite gegenüberliegenden Seite. Der erste Verschlusskörper 20 hat ein erstes Befestigungselement 21. Der zweite Verschlusskörper 40 hat ein zweites Befestigungselement 41.

Die Befestigungselemente dienen zur Befestigung der zu verbindenden Gegenstände, wie zum Beispiel Gurte, Bänder, Seile, Fensterläden, Hebeelemente bzw. Lastelement wie Ketten, oder andere Elemente, die mit der Verschlussvorrichtung miteinander verbunden werden sollen, wobei die Verbindung einen Verschluss bildet, der sich zum Beispiel nicht selbsttätig öffnet. In Figur 1A sind die Befestigungselemente durch Platten mit Öffnungen zur Verfügung gestellt, an denen die zu verbindenden Elemente zum Beispiel angeschraubt werden können.

Die verschlussseitige Seite des ersten Verschlusskörpers 20 hat zumindest einen geschlossenen Ring 22. Der Ring 22 bzw. die Ringe haben eine Öffnung 122, in die ein Verschlussstab 7 eingeführt werden kann. Die in Figur 1A dargestellte Ausführungsform beinhaltet zwei geschlossene Ringe 22. Die Öffnungen 122 bzw. ein Querschnitt eines zweiten Bereichs 7B des Verschlussstabs 7 sind rund ausgebildet. Hierdurch ist der Verschlussstab 7 drehbar in der Öffnung 122 (d.h. einer Durchführung) der geschlossenen Ringe 22 des ersten Verschlusskörpers zur Verfügung gestellt. Die Bohrung bzw. Öffnung 122 ist dazu bestimmt, formschlüssig einen Bereich des Verschlusstabs 7 aufzunehmen.

Figur 1B zeigt die Verschlussvorrichtung 100 in einem zusammengebaut Zustand und in geschlossener Stellung. Der Verschlussstab 7 ist durch die Durchführungen bzw. Öffnungen 122 der geschlossenen Ringe des ersten Verschlusskörpers 20 geführt. Der Verschlussstab 7 ist zum Beispiel mittels eines Klemmrings 9, der in eine Nut am Ende des Verschlussstabs eingeführt werden kann, an dem ersten Verschlusskörper 20 befestigt. Typischerweise können hierzu weitere Elemente wie zum Beispiel eine Unterlegscheibe 8 oder eine Druckscheibe 6 verwendet werden.

Gemäß typischen Ausführungsformen, die mit anderen Ausführungsformen kombiniert werden können, ist weiterhin eine Feder 5 zur Verfügung gestellt, die zum Beispiel mittels der Druckscheibe 6 den Verschlussstab 7 in axialer Richtung an eine Anschlagsposition drückt. Die Anschlagsposition kann zum Beispiel durch den Verschlusshebel 3, der am Anschlag an eine Stirnfläche des ersten Verschlusskörpers 20 andrückt, zur Verfügung gestellt werden.

Der zweite Verschlusskörper 40 weist zumindest einen offenen Ring 44 auf. Der offene Ring 44 umfasst eine Öffnung 144 und einen Schlitz 145. Der Schlitz 145 bildet die Öffnung des Rings 44. Die Bohrung bzw. Öffnung 144 ist dazu bestimmt, formschlüssig eine Hülse 10 aufzunehmen. Gemäß manchen Ausführungsformen kann eine Hülse 10 in die Öffnung 144 bzw. die Durchführung des offenen Rings 44 eingeführt werden. Die Hülse kann axial in der Durchführung fixiert werden, indem zum Beispiel eine zumindest teilweise umlaufende Nut (nicht dargestellt) in der Mantelfläche der Hülse zur Verfügung gestellt wird, in die ein in der Durchführung angeordneter Ring oder in der Durchführung angeordnete Kugeln eingreifen können. Es können auch andere axiale Befestigungen der Hülse vorgesehen werden. Zum Beispiel kann die Abmessung der Hülse in axialer Richtung kürzer sein als die Abmessung des offenen Rings. Hierdurch kann an den axialen Seiten des offenen Rings ein Stoppelement zur Verfügung gestellt werden.

Typischerweise weist die Hülse 10 eine Aussparung 11 auf. Diese korrespondiert mit dem Schlitz 145 und dient zur Aufnahme eines Teils des Verschlussstabs 7. Der Teil des Verschlussstab 7, der in die Aussparung 11 der Hülse eingeführt wird, zum Beispiel durch den Schlitz 145, ist zumindest ein erster Abschnitt 7A des Verschlussstabs 7. Der erste Abschnitt 7A stellt eine Verjüngung bzw. eine reduzierte Ausdehnung in zumindest einer Dimension in radialer Richtung des Verschlussstabs 7 dar.

Gemäß typischen Ausführungsformen, die mit anderen Ausführungsformen kombiniert werden können, hat der erste Abschnitt 7A des Verschlussstabs eine Abmessung in axialer Richtung, die der Abmessung des offenen Rings 44 entlang der axialen Richtung der Öffnung 144 (der Länge des offenen Rings) entspricht. D.h., die axiale Ausdehnung des ersten Abschnitts 7A ist gleich der Länge des offenen Rings oder größer als die Länge des offenen Rings.

Gemäß typischen Ausführungsformen, die mit den hier beschriebenen Ausführungsform kombiniert werden können ist der Verschlussstab, der teilweise einen runden Querschnitt in den zweiten Bereichen 7B aufweist, im ersten Abschnitt 7A abgeflacht. Der Verschlussstab weist in dem ersten Abschnitt 7A zum Beispiel zwei flache Ebenen oder auch vier flache Ebenen auf.

Zum Verschließen der Verschlussvorrichtung 100 wird der erste Verschlusskörper 20 und der zweite Verschlusskörper 40 ineinander geschoben. Hierbei wird der erste Abschnitt 7A des Verbindungstabs 7 durch den Schlitz 145 bzw. die Öffnung des offenen Rings 44 in die Aussparung 11 der Hülse 10 eingeführt. Durch Drehen des Verschlussstabs 7 rotiert die Hülse 10 in der Öffnung 144 des offenen Rings 44. Hierdurch rotiert die Aussparung 11 bzw. die Öffnung der Aussparung 11 relativ zu dem Schlitz 145. Somit wird die Verschlussvorrichtung 100 geschlossen.

Gemäß den hier beschriebenen Ausführungsformen hat der offene Ring 44 einen Hinterschnitt um die Hülse 10. Der offene Ring 44 hat folglich eine Umfangserstreckung von mehr als 180°. Hierdurch wird die Hülse 10 in radialer Richtung in der Öffnung 144 des offenen Rings fixiert. Dies trägt zum Verschließen der Verschlussvorrichtung 100 bei.

Im geschlossenen Zustand, d.h. bei einer geeigneten Rotation des Verschlussstabs 7 kann der Verschlusshebel 3 durch die Feder 5 in eine Vertiefung am ersten Verschlusskörper 20 gedrückt werden. Hierdurch kann eine ungewünschte Drehung des Verschlussstabs 7 verhindert werden.

Gemäß typischen Ausführungsformen, die mit anderen Ausführungsformen kombiniert werden können, kann ein Verschließen durch eine Drehung von zumindest 45° zur Verfügung gestellt werden. Typischerweise wird ein Verschließen durch eine Drehung von 90° oder mehr, zum Beispiel bis zu 315° zur Verfügung gestellt werden. Gemäß bevorzugten Beispielen kann ein Verschließen durch eine Drehung von 180°, insbesondere 120° oder 150° zur Verfügung gestellt. Gemäß weiteren typischen Ausführungsformen, kann ein Verschließen einer Verschlussvorrichtung mit einer Hülse durch eine Drehung von ungefähr 120° oder ungefähr 150° und ein Verschließen einer Verschlussvorrichtung ohne eine Hülse durch eine Drehung von ungefähr 90° oder ungefähr -90°, zur Verfügung gestellt werden.

Die in den Figuren 1A und 1B beschriebene Verschlussvorrichtung 100 weist zwei geschlossene Ringe 22 und einen offenen Ring 44 auf. Diese sind angeordnet, so dass sie beim Zusammenfügen der Verschlussvorrichtung 100 an jeweils anderen axialen Positionen des Verschlussstabs 7 angeordnet sind und somit ineinandergreifen können. Gemäß weiteren Ausführungsformen, die mit anderen hier beschriebenen Ausführungsformen kombiniert werden können, hat zumindest einer der Verschlusskörper zwei Ringe und der andere Verschlusskörper zumindest einen Ring. Die Verschlusskörper können jedoch eine Mehrzahl von Ringen wie zum Beispiel 3 Ringe, 4 Ringe, 5 Ringe oder auch mehr Ringe aufweisen. Typischerweise hat der erste Verschlusskörper einen Ring mehr als der zweite Verschlusskörper. Hierdurch kann eine einfache Montage des Befestigungsstabs am ersten Verschlusskörper gewährleistet werden. Die Anzahl der Ringe ist unter anderem durch die axiale Ausdehnung der Verschlussvorrichtung gegeben. Somit können für große Verschlussvorrichtungen auch eine große Anzahl von Ringen, wie zum Beispiel 30 Ringe oder mehr Verfügung gestellt werden.

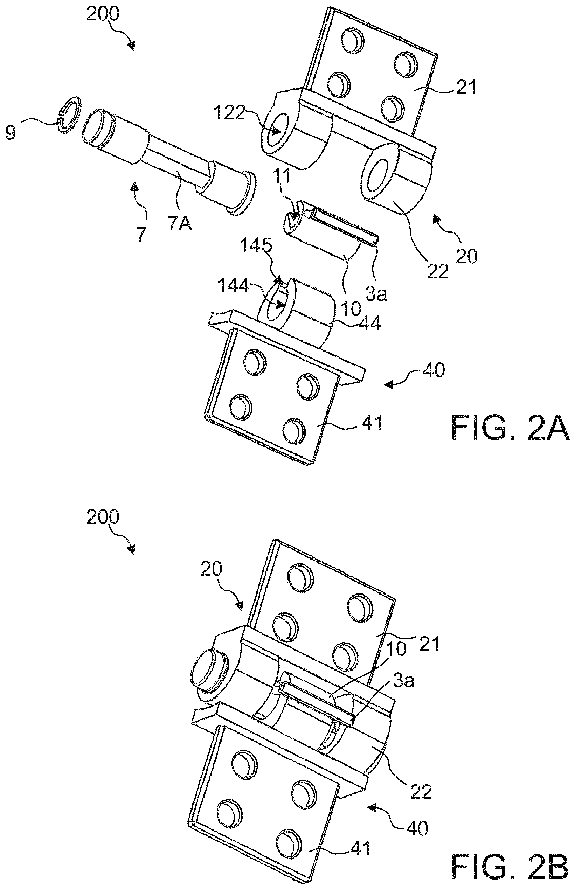

Figur 2A zeigt eine weitere Ausführungsform einer Verschlussvorrichtung 200. Bei der Verschlussvorrichtung 200 ist anstelle des Verschlusshebels 3, der zum Beispiel in Figur 1A dargestellt ist, ein Verschlusshebel 3A an der Hülse 10 zur Verfügung gestellt. Mit dem Verschlusshebel 3A kann die Hülse 10 in dem offenen Ring 44 gedreht werden, zum Beispiel nach dem der Verschlussstab 7 mit dem ersten Abschnitt 7A in die Aussparung 11 der Hülse 10 eingeführt worden ist. Hierdurch findet eine Rotation der Aussparung 11 bzw. der Öffnung der Aussparung 11 relativ zu dem Schlitz 145 des offenen Rings statt. Hierdurch wird die Verschlussvorrichtung 200 geschlossen.

Der Hinterschnitt des offenen Rings 44 fixiert die Hülse 10 in radialer Richtung in dem offenen Ring 44. Nach der Verdrehung der Aussparung 11 relativ zu dem Schlitz 145 kann der Stab bzw. der erste Verschlusskörper 20, an dem der Verschlussstabs 7 an den geschlossenen Ringen 22 befestigt ist, nicht mehr von dem zweiten Verschlusskörper wegbewegt werden, was zu einem verschließen der Verschlussvorrichtung 200 führt.

Gemäß typischen Ausführungsformen, die mit anderen hier beschriebenen Ausführungsformen kombiniert werden können, weist der erste Abschnitt 7A des Verschlussstabs 7 zumindest zwei gegenüberliegende Flächen auf. Diese können zum Beispiel parallel angeordnet sein. Diese Flächen haben einen Abstand, der es erlaubt, den ersten Abschnitt 7A des Verschlussstabs 7 in die Aussparung 11 der Hülse 10 einzuführen. Weiterhin ist es möglich, eine Fase an den Flächen des ersten Abschnitt 7A zur Verfügung zu stellen und/oder einen Bereich mit einem verringerten Abstand der Flächen zur Verfügung zu stellen, so dass der Verschlussstabs 7 leichter in die Aussparung 11 der Hülse eingeführt werden kann.

Da in der Figur 2A dargestellten Ausführungsform ein Verschließen der Verschlussvorrichtung 200 durch eine Rotation der Hülse 10 zur Verfügung gestellt wird, kann auf eine Arretierung des Verschlussstabs 7, zum Beispiel an einer Vertiefung am ersten Verschlusskörper 20, verzichtet werden. Der Verschlussstab 7 ist in den geschlossenen Ringen 22 bzw. den Öffnungen 122 derart angeordnet, dass der Verschlussstabs 7 rotieren kann. Eine Befestigung des Verschlussstabs 7, die wie in Figur 1A dargestellt eine Feder beinhaltet, kann in FIG. 2A auf eine axiale Befestigung mit lediglich einem Federring reduziert werden. Gemäß anderen Ausführungsformen, kann eine Arretierung des Verschlussstabs 7 am Verschlusskörper 20 auch für Ausführungsformen wie sie in Bezug auf FIG. 2A beschrieben sind, zur Verfügung gestellt werden. Andere axiale Befestigungen des Verschlusstabs können auch durch Schrauben oder andere Mittel zur Verfügung gestellt werden. Solche Mittel dienen der axialen Befestigung des Stabs um zu verhindern, dass der Stab in axialer Richtung aus den Öffnungen 122, d.h. den Durchführungen durch die Ringe herausrutschen kann.

Figur 2B zeigt die Verschlussvorrichtung 200 in einem geschlossenen Zustand. Der erste Verschlusskörper 20 und der zweite Verschlusskörper 40 sind ineinandergeschoben, wobei der erste Abschnitt 7A des Verschlussstabs 7 in den Schlitz 145 des offenen Rings 44 eingeführt wird. Durch Drehen des Verschlusshebel 3A wird die Aussparung 11 in der Hülse 10 gegenüber dem Schlitz 145 des offenen Rings 44 verdreht. Hierbei dreht sich auch der Verschlussstab 7. In diesem Zustand ist der Verschlussstab 7 in dem offenen Ring 44 radial fixiert und die Verschlussvorrichtung 200 somit verschlossen.

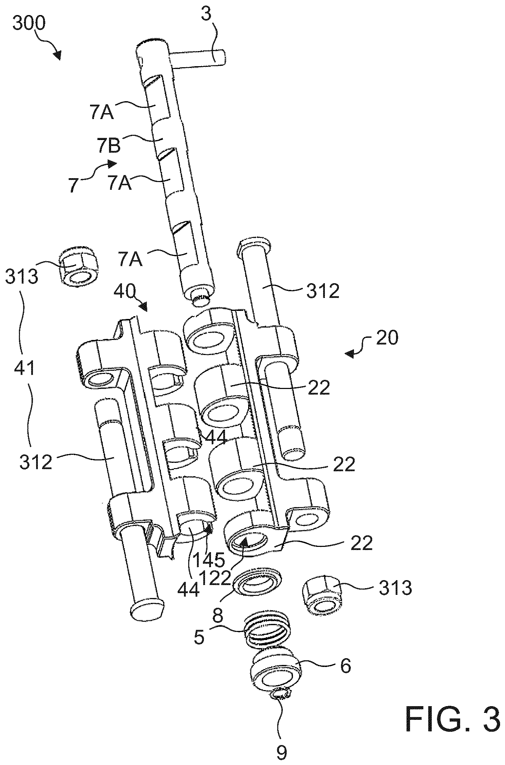

Figur 3 zeigt eine Verschlussvorrichtung 300 und dient zur Illustration weiterer Ausführungsformen der Erfindung. Im Gegensatz zu den Ausführungsformen, die zum Beispiel in Bezug auf Figur 1A und 1B beschrieben wurden, hat der erste Verschlusskörper 20 in Figur 3 beispielhaft 4 Ringe und der zweite Verschlusskörper 40 beispielhaft 3 Ringe. Diese sind in axialer Richtung des Verschlussstabs 7 derart angeordnet, dass sie gemäß hier beschriebenen typischen Ausführungsformen abwechselnd in axialer Richtung zur Verfügung gestellt sind.

Analog zu den bereits in Bezug auf Figur 1A und 1B beschriebenen Ausführungsformen, ist ein Verschlusshebel 3 an dem Verschlussstab 7 zur Verfügung gestellt, wobei der Verschlussstab 7 am ersten Verschlusskörper 20 mittels Federring 9, Druckscheibe 6, Feder 5 und Unterlegscheibe 8 zur Verfügung gestellt ist.

Das erste Befestigungsmittel und das zweite Befestigungsmittel 41 kann gemäß typischen Ausführungsformen, die mit anderen Ausführungsformen kombiniert werden können, wie in Figur 3 dargestellt durch einen Bolzen 312 und eine Fixierung des Bolzens 312 mit einer Mutter 313 zur Verfügung gestellt werden. Beispielhaft ist das erste Befestigungselement 41 in Figur 3 mit einem Bezugszeichen gekennzeichnet. Zu verbindende Elemente, wie Gurte, Bänder, Seile, Ketten, usw., können an den Bolzen 312 befestigt werden. Dieser kann zuvor oder anschließend durch die Mutter 313 an dem jeweiligen Verschlusskörper fixiert werden.

Ein weiterer Unterschied zu den zuvor beschriebenen Ausführungsformen besteht darin, dass die Verschlussvorrichtung 300 ohne eine Hülse ausgebildet ist. Hierzu sind die ersten Abschnitte 7A derart zur Verfügung gestellt, dass sowohl eine Aussparung, zum Beispiel in Form von zwei Flächen zur Verfügung gestellt ist, als auch radiale Bereiche existieren, in denen die runde Kontur des Verschlussstabs 7 erhalten geblieben ist. Die in Figur 3 dargestellten ersten Abschnitte 7A des Verschlussstabs 7 weisen somit zwei Bereiche auf, die sich in axialer Richtung erstrecken. Zum einen existieren erste Bereiche mit einer im Vergleich zu einem runden Querschnitt reduzierten Abmessung. Diese können zum Beispiel durch zwei Flächen ausgestaltet sein. Weiterhin existieren zweite Bereiche, in denen Kreisabschnitte erhalten sind. Diese Kreisabschnitte entsprechen in ihrer Dimension dem offenen Ring 44 bzw. der Öffnung 144 (d.h. der Durchführung) in dem offenen Ring. Hierdurch wird nach einer Rotation des Verschlussstabs 7 zum Beispiel um 90°, eine Fixierung des Verschlussstabs 7 in dem offenen Ring gewährleistet.

Gemäß typischen Ausführungsformen, die mit anderen Ausführungsformen kombiniert werden können, können ein oder mehrere erste Abschnitte 7A eines Verschlussstabs 7 derart ausgestaltet sein, dass die Abmessung der äußeren Kontur 7 B, die einen kreisförmigen Querschnitt hat, in zumindest einer Richtung gleich der Abmessung des ersten Abschnitt 7 A in dieser Richtung ist. Bei einer solchen Ausgestaltung kann auf eine Hülse verzichtet werden.

Gemäß anderen Ausführungsformen, die ebenfalls mit anderen Ausgestaltungen kombiniert werden können, hat der Querschnitt des ersten Abschnitts 7A des Verschlussstabs 7 in jeder Richtung eine gegenüber dem kreisförmigen Querschnitt reduzierte Abmessung. Hierdurch entsteht der benötigte Platz in der Durchführung des offenen Rings, um eine Hülse für die Verschlussvorrichtung zu verwenden. Die Verwendung einer Hülse bietet hierbei den Vorteil, dass der gesamte Innenraum der Öffnung 144 mit einem Festkörper bzw. Material ausgefüllt werden kann, d.h. formschlüssig ist. Hierzu hat die Hülse zum Beispiel eine Runde Außenkontur, die der Öffnung 144 des offenen Rings entspricht, und die Aussparung 11 in der Hülse kann ausgestaltet sein, um in ihrer Abmessung den Dimensionen des ersten Abschnitt 7A zu entsprechen. Somit verbleibt bei entsprechenden Abmessungen der Elemente kein Spalt oder ein nur sehr geringer Spalt innerhalb der runden Öffnung 144 des offenen Rings 44.

Bei einer wie in Figur 3 dargestellten Ausführungsform ohne Hülse sind die Aussparungen, d.h. die Bereiche mit einer reduzierten Abmessung, innerhalb der ersten Abschnitte des Verschlussstabs 7 auch nach der Montage in einem der offenen Ring 44 nicht direkt an einem Festkörper angrenzend. Es entsteht ein Luftspalt zwischen der Aussparung und einem Bereich des offenen Rings. Das Vermeiden einer Hülse kann jedoch zu geringeren Kosten führen, was für manche Ausführungen bzw. Anwendungen von Vorteil sein kann.

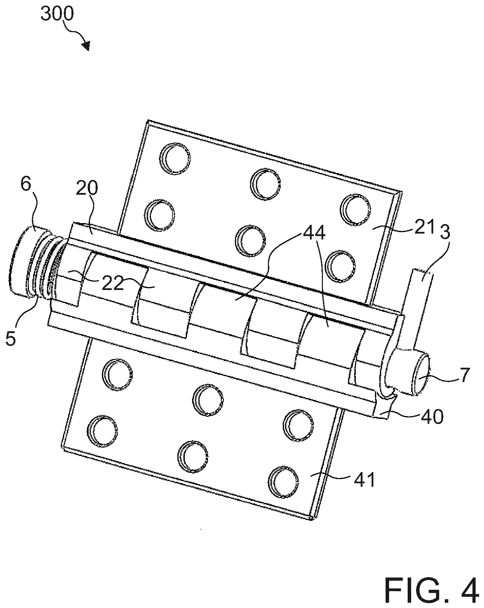

Figur 4 zeigt die Verschlussvorrichtung 300 in einem montierten und verschlossenen Zustand. Hierbei ist der am Verschlussstab 7 montierte Verschlusshebel 3 in einer geschlossenen Stellung und wird durch die Feder 5 und die Druckscheibe 6 gegen den ersten Verschlusskörper 20 gedrückt. Der erste Verschlusskörper 20 weißt geschlossene Ringe 22 auf und hat ein Befestigungselement 21, an dem eines der zu verbindenden Elemente befestigt sein kann. Der zweite Verschlusskörper 40 weißt offene Ringe 44 auf und hat ein Befestigungselement 41, an dem ein korrespondierendes zu verbindendes Element befestigt sein kann. Im geschlossenen Zustand ist der Verschlussstab 7 gedreht, so dass die ersten Bereiche 7A des Verschlussstabs 7 nicht durch den Schlitz in dem offenen Ring hindurchgeführt werden können, so dass der Verschluss in einer geschlossenen Position ist.

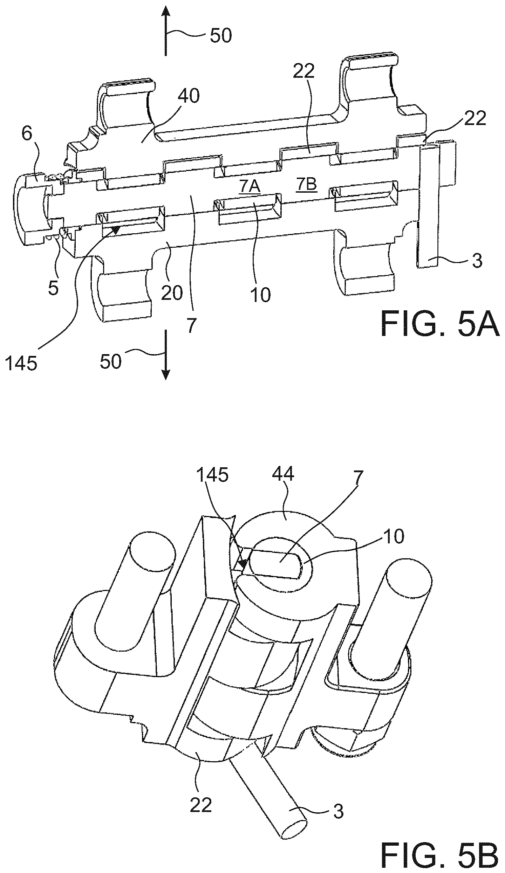

Die Figuren 5A und 5B zeigen zwei Querschnittansichten einer Verschlussvorrichtung, wobei die Funktionen der Verschlussvorrichtung gemäß Ausführungsform der vorliegenden Erfindung nochmals erläutert werden kann. In Figur 5A ist eine Verschlussvorrichtung in einem geschlossenen Zustand dargestellt. Ein erster Verschlusskörper 20 mit geschlossenen Ringen 22 ist mit einem Verschlussstabs 7 derart verbunden, dass der Verschlussstabs 7 in dem ersten Verschlusskörper 20 rotieren kann. Hierbei rotieren die Bereiche 7B des Verschlussstabs 7, die einen runden Querschnitt haben, in den geschlossenen Ringen 22. Der zweite Verschlusskörper 40 hat offene Ringe, wobei in Figur 5A exemplarisch ein Schlitz 145 gekennzeichnet ist. In Figur 5A ist der, zum Beispiel mittels des Verschlusshebels 3 gedrehte Verschlussstab 7, derart dargestellt, dass die Hülse 10 bzw. die Hülsen 10 relativ zu dem Schlitz 145 gedreht sind. Somit umgreifen die Hinterschnitte der offenen Ringe die Hülse. Diese ist hierdurch radial fixiert und der Verschlussstabs 7 bzw. der erste Verschlusskörper 20 kann nicht in Richtung der Pfeile 50 bewegt werden.

Zum Öffnen, wie in Figur 5B dargestellt, wird zum Beispiel mittels des Verschlusshebels 3, der Verschlussstab 7 derart gedreht, dass die Aussparung der Hülse, respektive die Öffnung der Aussparung, in Richtung des Schlitzes 145, d.h. der Öffnung des offenen Rings 44, zeigt. In dieser Stellung kann der Verschlussstabs 7 aus dem offenen Ring geführt werden, wodurch die Verschlussvorrichtung geöffnet wird. Zum Schließen der Verschlussvorrichtung wird der Verschlussstab 7 durch die Öffnung des offenen Rings, d.h. durch den Schlitz 145, in die in Figur 5B dargestellte Position geführt. Aus dem in Figur 5B dargestellten Zustand heraus kann durch Drehen des Verschlussstabs 7, zum Beispiel am Verschlusshebel 3, der Verschlussstab 7 inklusive der Hülse 10 relativ zur Öffnung des offenen Rings, d.h. des Schlitzes, gedreht werden, wodurch die Verschlussvorrichtung verriegelt wird.

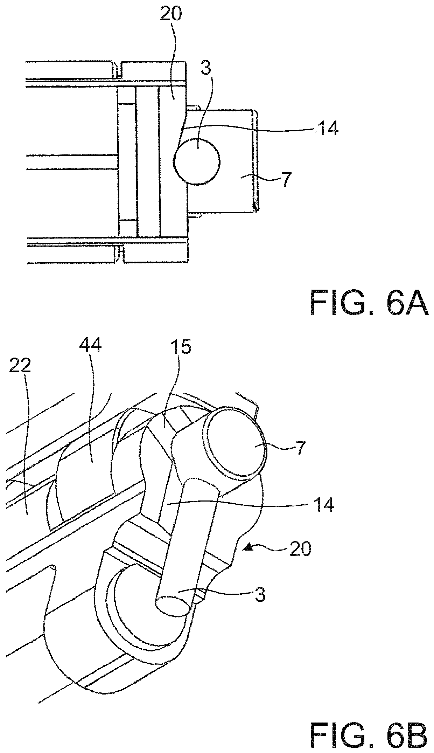

Wie in Figur 6A und 6B dargestellt, kann die Verschlussvorrichtung ausgestaltet sein, um automatisch zu verriegelten und/oder das Risiko einer ungewollten Entriegelung zu verringern. Hierfür kann der erste Verschlusskörper 20 mit einer schiefen Ebene 14 zur Verfügung gestellt werden. Eine schiefe Ebene 15 kann zusätzlich oder alternative auch für eine offenen Position verwendet werden. Diese bildet eine Vertiefung im ersten Verschlusskörper 20. Durch die Federkraft einer Feder 5, wie sie zum Beispiel in Figur 1A dargestellt ist, wird der Verschlusshebel 3 in die Vertiefung am ersten Verschlusskörper 20 gezogen. Durch die Ausgestaltung der schiefen Ebene kann dies mittels der Feder 5 automatisch erfolgen. In Figur 6A ist die Verschlussvorrichtung bzw. der Verschlusshebel 3 in einer geschlossenen Position dargestellt. In Figur 6B ist die Verschlussvorrichtung bzw. Verschlusshebel 3 in einer geschlossenen Position dargestellt. Basierend auf der Federkraft kann aus der offenen Position heraus der Verschlusshebel 3 entlang der schiefen Ebene in eine Rastposition geführt werden.

Gemäß typischen Ausführungsformen, kann ein Verschließen der Verschlussvorrichtung durch eine Drehung des Stabes um mindestens 45° (zum Beispiel bis zu 315°) durchgeführt werden. Typischerweise, kann der Verschlussstab um 90°, 120°, 150° oder 180° von einer offenen Position in eine geschlossene Position gedreht werden..

In einer möglichen Ausführungsform ist die erfindungsgemäße Verschlussvorrichtung als Schnellverschluss zum Beispiel für Hebebänder verschiedener Abmessungen, Stärke und Lasttragfähigkeit ausgeführt. Die Hebebänder können aus Polyester sein. Für den Zusammenbau kann der Schnellverschluss einfach mit einer Verschwenkung des mittigen Stabes zum Beispiel um 120°, Hebebänder oder andere Elemente koppeln bzw. entkoppeln.

Die praktische Beschaffenheit der erfindungsgemäßen Ausführungsformen der Verschlussvorrichtung bzw. Schnellverschlusses gegenüber den bis heute bekannten herkömmlichen Systemen besteht in der Schnelligkeit und Einfachheit der Kopplung bzw. Entkopplung, unter Wahrung der Sicherheit der Ankopplung/Entkopplung. Gegenüber den bekannten Systemen müssen keine Federn zusammengedrückt werden, man muss nicht Riemen/Seile anheben, z.B. um sie in die Haken einzuhaken. Weiterhin müssen keine Bolzen eingeführt bzw. herausgezogen werden (z.B. bei Türen und anderen Konstruktionselementen, die durch Bolzen fixiert werden).

Gemäß typischen Ausführungsformen, die mit den hier beschriebenen Ausführungsformen kombiniert werden können, entspricht die Anschlagsbreite, d.h. die Breite der Verbindung entlang des Verschlusstabs, zumindest der Breite des Hebebands oder der zu verbindenden Elemente. Die Riemen oder Bänder, z.B. die Polyesterriemen, können verschiedene Abmessungen aufweisen, von 20 mm bis 300 mm. Auch andere Sondergrößen/-formate können ebenso berücksichtigt werden. Mögliche Anwendungsbeispiele für Ausführungsformen können das Heben von Lasten, der Aufbau von Zelten bzw. Großzelten, Abgrenzungen oder Zäune (Straßen, Plätze, Baustellen, usw.) Hagelschutznetze, Beschattungsnetze, Segel usw. sein. Aber auch andere Elemente wie Fensterläden, Türen oder jegliche Elemente, bei denen zwei Teile schnell und lösbar verbindbar, sicher gekoppelt werden sollen, können mittels der hier beschriebenen Ausführungsformen verbunden werden.

Der Schnellverschluss kann aus verschiedenen Materialien wie Stahl, Leichtlegierungen, aus Aluminium, Kunststoff, usw. aufgrund der verlangten Tragfähigkeiten von zum Beispiel 100 g oder mehr, insbesondere 1 kg bis 180 t und darüber hergestellt werden.

Gemäß weiteren Ausführungsformen, die mit den hier beschriebenen Ausführungsform kombiniert werden können, kann die Länge des Verschlussstabs in axialer Richtung zumindest 5 mm sein, und typischerweise von 20 mm bis 500 mm sein. Weiterhin kann zusätzlich oder alternativ der Durchmesser des Verschlussstabs 0,5 mm oder mehr sein, oder 3 mm oder mehr sein, zum Beispiel 5 mm bis 300 mm sein. Gemäß noch weiteren Ausführungsformen, die mit den hier beschriebenen Ausführungsform kombiniert werden können, kann der Schlitz 145 bzw. die Öffnung des offenen Rings 44 einen Winkelbereich von 5° oder mehr, zum Beispiel 10° bis 150° umfassen.

## Patentansprüche

1. Verschlussvorrichtung zum wiederholbaren Verbinden und Trennen eines ersten Verschlusskörpers (20) mit einem zweiten Verschlusskörper (40), weiterhin umfassend:
einen Verschlussstab (7), wobei der Verschlussstab (7) in einem ersten Abschnitt (7A) zwei gegenüberliegende flache Ebenen aufweist;
wobei der erste Verschlusskörper (20) mindestens eine Durchführung (122) für den Verschlussstab umfasst, wobei der Verschlussstab drehbar in der mindestens einen Durchführung zur Verfügung gestellt ist; und
der zweite Verschlusskörper (40) mindestens ein Eingreifelement (44; 10) umfasst, das durch Drehen des Verschlussstabs mit dem Verschlussstab verriegelt werden kann.

2. Verschlusskörper nach Anspruch 1, wobei der Verschlussstab in einer ersten Rotationsposition des Verschlussstabes in den zweiten Verschlusskörper translatorisch in einer radialen Richtung des Verschlussstabes einführbar ist und in einer zweiten Rotationsposition, die von der ersten Rotationsposition unterschiedlich ist, in radialer Richtung in dem zweiten Verschlusskörper fixiert ist.

3. Verschlussvorrichtung nach einem der Ansprüche 1 bis 2, wobei das mindestens eine Eingreifelement (10) drehbar in dem zweiten Verschlusskörper gelagert ist.

4. Verschlussvorrichtung nach einem der Ansprüche 1 bis 3, wobei das mindestens eine Eingreifelement so geformt ist, dass es den Verschlussstab in einem ersten Bereich seitlich umfassen kann und durch Drehen des Verschlussstabs in dem zweiten Verschlusskörper gedreht wird.

5. Verschlussvorrichtung nach einem der Ansprüche 1 bis 4, wobei das mindestens eine Eingreifelement (10) ein zylindrischer Körper ist, der eine seitlich Aussparung (11) aufweist, mit der er den Verschlussstab seitlich umfassen kann.

6. Verschlussvorrichtung nach einem Ansprüche 1 bis 5, wobei der Verschlussstab zumindest einen ersten Abschnitt (7a) und zumindest einen zweiten Abschnitt (7b) umfasst, wobei der zweite Abschnitt einen runden Querschnitt hat und der Querschnitt des ersten Abschnitts in allen Richtungen im Vergleich zum runden Querschnitt des zweiten Abschnitts reduzierte Abmessungen aufweist.

7. Verschlussvorrichtung nach einem der Ansprüche 1 bis 2, wobei der Verschlussstab zumindest einen ersten Abschnitt (7a) und zumindest einen zweiten Abschnitt (7b) umfasst, wobei der zweite Abschnitt einen runden Querschnitt hat und der Querschnitt des ersten Abschnitts in zumindest einer Richtung im Vergleich zum runden Querschnitt des zweiten Abschnitts dieselbe Abmessungen aufweist.

8. Verschlussvorrichtung nach Anspruch 7, wobei das mindestens eine Eingreifelement durch zumindest einen offenen Ring am zweiten Verschlusskörper ausgebildet ist.

9. Verschlussvorrichtung nach einem der Ansprüche1 bis 8, umfassend:
einen am Verschlussstab befestigten ersten Stopper, der verhindert, dass der Verschlussstab in einer ersten axialen Richtung aus der mindestens einen Durchführung herausgeführt werden kann.

10. Verschlussvorrichtung nach einem der Ansprüche 1 bis 9, umfassend:
einen am Verschlussstab befestigten zweiten Stopper, der verhindert, dass der Verschlussstab in einer der ersten axialen Richtung entgegen gerichteten zweiten Richtung aus der mindestens einen Durchführung herausgeführt werden kann.

11. Verschlussvorrichtung nach einem der Ansprüche 9 bis 10, wobei der erste Stopper ein federndes Element aufweist, so dass der Verschlussstab mittels einer Federkraft in die zweite Richtung gezogen oder gedrückt wird.

12. Verschlussvorrichtung nach einem der Ansprüche 1 bis 11, wobei der Verschlussstab einen Riegel aufweist, mit dem die für den Verschluss erforderliche Drehposition des Verschlussstabs in Bezug zu dem ersten Verschlusskörper verriegelt werden kann.

13. Verschlussvorrichtung nach Anspruch 12, wobei der Riegel in einer Vertiefung in dem ersten Verschlusskörper fixierbar ist..

14. Verschlussvorrichtung nach einem der Ansprüche 12 bis 13, wobei der erste Verschlusskörper eine Oberflächenformgebung aufweist, über die der Riegel mittels der Federkraft des ersten Stoppers selbständig geführt wird und damit den Verschlussstab verriegelt.

15. Verschlussvorrichtung nach Anspruch 14, wobei die Oberflächenformgebung eine schräge Ebene (14) ist.

16. Verschlussvorrichtung nach einem der Ansprüche 1 bis 15, wobei der Durchmesser des Verschlussstabs zumindest 0.5 mm, insbesondere zumindest 1 mm, weiterhin insbesondere zumindest 3 mm, weiterhin insbesondere zumindest 5 mm ist.

## Claims

1. A closing device for repeatably joining and separating a first closing body (20) with a second closing body (40), further comprising:
a locking rod (7), wherein the locking rod (7) has two opposing flat planes in a first section (7A);
wherein the first closing body (20) comprises at least one bushing (122) for the locking rod, wherein the locking rod is provided in the at least one bushing so that it can rotate; and
the second closing body (40) comprises at least one engaging element (44; 10), which can be locked with the locking rod by turning the locking rod.

2. The closing device according to claim 1, wherein the locking rod is translationally introducible into the second closing body in a radial direction of the locking rod in a first rotational position of the locking rod, and is fixed in the second closing body in a radial direction in a second rotational position that differs from the first rotational position.

3. The closing device according to one of claims 1 to 2, wherein the at least one engaging element (10) is rotatably mounted in the second closing body.

4. The closing device according to one of claims 1 to 3, wherein the at least one engaging element is formed in such a way that it can laterally encompass the locking rod in a first area, and is turned in the second closing body by turning the locking rod.

5. The closing device according to one of claims 1 to 4, wherein the at least one engaging element (10) is a cylindrical body, which has a lateral recess (11) with which it can laterally encompass the locking rod.

6. The closing device according to one of claims 1 to 5, wherein the locking rod comprises at least one first section (7a) and at least one second section (7b), wherein the second section has a round cross section, and the cross section of the first section has reduced dimensions in all directions in comparison to the round cross section of the second section.

7. The closing device according to one of claims 1 to 6, wherein the locking rod comprises at least one first section (7a) and at least one second section (7b), wherein the second section has a round cross section, and the cross section of the first section has the same dimensions in at least one direction in comparison to the round cross section of the second section.

8. The closing device according to claim 7, wherein the at least one engaging element is formed by at least one open ring on the second closing body.

9. The closing device according to one of claims 1 to 8, comprising:
a first stopper fastened to the locking rod, which inhibits removing the locking rod from the at least one passage in a first axial direction.

10. The closing device according to one of claims 1 to 9, comprising:
a second stopper fastened to the locking rod, which inhibits removing the locking rod from the at least one passage in a second direction directed opposite the first axial direction.

11. The closing device according to one of claims 9 to 10, wherein the first stopper has a spring element, so that the locking rod is pulled or pushed in the second direction by a spring force.

12. The closing device according to one of claims 1 to 11, wherein the locking rod has a bolt, with which the rotational position of the locking rod required for closing can be locked relative to the first closing body.

13. The closing device according to claim 12, wherein the bolt can be fixed in a recess in the first closing body.

14. The closing device according to one of claims 12 to 13, wherein the first closing body has a shaped surface over which the bolt is independently guided by the spring force of the first stopper, thereby locking the locking rod.

15. The closing device according to claim 14, wherein the shaped surface is an inclined plane (14).

16. The closing device according to one of claims 1 to 15, wherein the diameter of the locking rod is at least 0.5 mm, in particular at least 1 mm, further in particular at least 3 mm, further in particular at least 5 mm.

## Revendications

1. Dispositif de fermeture, destiné à assembler et à séparer de manière reproductible un premier corps d'obturation (20) avec un deuxième corps d'obturation (40), comprenant par ailleurs :
une tige de fermeture (7), la tige de fermeture (7) comportant dans un premier tronçon (7A) deux plans plats opposés ;
le premier corps d'obturation (20) comprenant au moins un passage (122) pour la tige de fermeture, la tige de fermeture étant mise à disposition de manière rotative dans l'au moins un passage ; et
le deuxième corps d'obturation (40) comprenant au moins un élément d'engagement (44 ; 10), qui par rotation de la tige de fermeture peut se verrouiller avec la tige de fermeture.

2. Corps d'obturation selon la revendication 1, dans une première position en rotation de la tige de fermeture, la tige de fermeture étant introductible en translation dans un corps d'obturation dans une direction radiale de la tige de fermeture et dans une deuxième position de rotation, qui est différente de la première position de rotation, dans la direction radiale dans le deuxième corps d'obturation.

3. Dispositif de fermeture selon l'une quelconque des revendications 1 à 2, l'au moins un élément d'engagement (10) étant logé de manière rotative dans le deuxième corps d'obturation.

4. Dispositif de fermeture selon l'une quelconque des revendications 1 à 3, l'au moins un élément d'engagement étant façonné de sorte à pouvoir englober latéralement la tige de fermeture dans une première zone et à tourner dans le deuxième corps d'obturation lors d'une rotation de la tige de fermeture.

5. Dispositif de fermeture selon l'une quelconque des revendications 1 à 4, l'au moins un élément d'engagement (10) étant un corps cylindrique, qui comporte une encoche (11) latérale, avec laquelle elle peut englober latéralement la tige de fermeture.

6. Dispositif de fermeture selon l'une quelconque des revendications 1 à 5, la tige de fermeture comprenant au moins un premier tronçon (7a) et au moins un deuxième tronçon (7b), le deuxième tronçon ayant une section transversale ronde et la section transversale du premier tronçon présentant dans toutes les directions des dimensions réduites en comparaison du deuxième tronçon.

7. Dispositif de fermeture selon l'une quelconque des revendications 1 à 6, la tige de fermeture comprenant au moins un premier tronçon (7a) et au moins un deuxième tronçon (7b), le deuxième tronçon ayant une section transversale ronde et la section transversale du premier tronçon présentant dans toutes les directions les mêmes dimensions en comparaison du deuxième tronçon.

8. Dispositif de fermeture selon la revendication 7, l'au moins un élément d'engagement étant conçu par au moins une bague ouverte dans le deuxième corps d'obturation.

9. Dispositif de fermeture selon l'une quelconque des revendications 1 à 8, comprenant :
un premier bloqueur, fixé sur la tige de fermeture qui empêche que la tige de fermeture puisse être ressortie de l'au moins un passage dans une première direction axiale.

10. Dispositif de fermeture selon l'une quelconque des revendications 1 à 9, comprenant :
un deuxième bloqueur fixé sur la tige de fermeture, qui empêche que la deuxième tige de fermeture puisse être ressortie de l'au moins un passage dans une deuxième direction orientée à l'encontre de la première direction.

11. Dispositif de fermeture selon l'une quelconque des revendications 9 à 10, le premier bloqueur comportant un élément résilient, de sorte que la tige de fermeture puisse être tirée ou poussée au moyen d'une force de ressort dans la deuxième direction.

12. Dispositif de fermeture selon l'une quelconque des revendications 1 à 11, la tige de fermeture comportant un verrou, avec lequel la position en rotation de la tige de fermeture requise pour la fermeture peut être verrouillée par rapport au corps d'obturation.

13. Dispositif de fermeture selon la revendication 12, le verrou étant susceptible d'être fixé dans un creux dans le premier corps d'obturation.

14. Dispositif de fermeture selon l'une quelconque des revendications 12 à 13, le premier corps d'obturation présentant une conformation superficielle, par l'intermédiaire de laquelle le verrou est bloqué automatiquement au moyen de la force de ressort du premier bloqueur et verrouille ainsi la tige de fermeture.

15. Dispositif de fermeture selon la revendication 14, la conformation superficielle étant un plan incliné (14).

16. Dispositif de fermeture selon l'une quelconque des revendications 1 à 15, le diamètre de la tige de fermeture étant d'au moins 0,5 mm, notamment d'au moins 1 mm, par ailleurs d'au moins 3 mm, par ailleurs, d'au moins 5 mm.
